# EUROPEAN PATENT APPLICATION

(11) **EP 1 655 921 A1**
(43) Date of publication of application: **10.05.2006**
(21) Application number: 05021426.1
(22) Date of filing: 30.09.2005
(51) Int. Cl.: H04L 29/06, H04Q 7/38

(54) **Apparatus and method for authenticating user for network access in communication system**

(30) Priority: 30.09.2004 KR 2004078023
(71) Applicant: Samsung Electronics Co., Ltd., Suwon-si, Gyeonggi-Do (KR)
(72) Inventor: Park, Hyun-Ah, dong Yeongtong-gu Suwon-si Gyeonggi-do (KR)
(74) Representative: Lang, Johannes

(57) **Abstract**

An apparatus for authenticating a user for network access in a communication system comprises: an input module contained in a subscriber terminal for receiving and transferring identification information and a password for network access from a user; an authentication supplicant contained in network equipment for requesting network access authentication for the identification information and password transferred from the input module; an authentication server for storing information related to the network access authentication, and for performing authentication to determine whether to permit the subscriber terminal to access a network in response to the authentication request; and a protocol authenticator for performing protocol processing between the authentication supplicant and the authentication server. A corresponding method is disclosed. Thus, it is possible to authenticate subscriber terminals for network access without the installation, by an Internet service provider, of specific software (e.g., a supplicant program) in all of the subscriber terminals.

## Description

### BACKGROUND OF THE INVENTION

### Technical Field

The present invention relates to a communication system and, more particularly, to an apparatus and method for authenticating a user for network access in a communication system.

### Related Art

As network services using a communication system are diversified, limited services are often provided to users based on the type of the network services.

In the limited service, a network service provider using the communication system performs an authentication procedure in which it is confirmed, prior to initiation of the service, whether a user or device desiring to use the network service is authorized to use the service. For example, if a device or user unauthorized for a specific network service attempts to access a local area network (LAN) to request the specific network service, the service provider blocks the unauthorized device or user, through the authentication procedure, from using the specific network service.

In order to perform such an authentication procedure, the IEEE standard group has defined IEEE 802.1X, which supports port-based network access, as a standard of the LAN and of the metropolitan area network (MAN). The IEEE 802. 1 X provides an authentication/ authorization scheme which is compatible between devices connected to an IEEE 802 LAN so as to control port-based network access. An authentication apparatus for realizing the authentication scheme is provided in the IEEE 802.1 X.

The authentication apparatus includes an authentication supplicant mounted in a subscriber terminal for requesting authentication, and an authentication database (DB) for storing authentication-related information. The user authentication apparatus further includes an authentication server for performing authentication so as to provide a network service in response to a request from the authentication supplicant, and a protocol authenticator normally located in a network switch for providing protocol interworking between the authentication supplicant and the authentication server. The subscriber terminal and the network switch are interconnected via a LAN.

When the subscriber terminal sends a message (EAPoL Start: Extensible Authentication Protocol (EAP) over LAN Start) to the network switch and, thus, to the protocol authenticator provided therein, reporting the initiation of the authentication process, the network switch sends a message (EAP Request) to the subscriber terminal, requesting identification information needed to identify the subscriber or device for which authentication is requested. At this point, if the initiation of the user authentication process is determined by the network switch rather than the subscriber terminal, the process may be omitted.

Meanwhile, if the subscriber terminal sends a response message (EAP Response) containing its own identification (ID) to the network switch in response to the request message (EAP Request), the network switch sends an access request message (Access Request) to the authentication server so that authentication of the subscriber terminal is carried out. At this point, the network switch includes the identification (ID) of the subscriber terminal in the access request message (Access Request) for the purpose of sending it.

In response to the request, the authentication server sends a message (Access Challenge) to the network switch in order to request an access password. The network switch then sends to the subscriber terminal a message (EAP Request) in an EAP format, which is produced by extracting only a portion, corresponding to an EAP, from the message (Access Challenge). In addition to the foregoing message, the authentication server sends encryption scheme information in order to allow the access password to be encrypted.

Meanwhile, the subscriber terminal, which receives the access password request and the encryption scheme information for the access password, encrypts a pre-stored or user-input access password using the encryption scheme, and includes the encrypted access password in a response message (EAP Response) which is transmitted to the network switch.

The network switch includes the encrypted access password in an access request message (Access Request) which is sent to the authentication server. The authentication server performs the network access authentication of the subscriber terminal based on the received access password. As the authentication result, when desiring to authenticate the subscriber terminal for network access, the authentication server sends a message (Access Accept) to the network switch, reporting the access authentication. The network switch translates the message (Access Accept) into a message (EAP Request) in an EAP format, and then sends the message (EAP Success) in the EAP format to the subscriber terminal.

In the latter system, the authentication supplicant (e.g., an IEEE 802.1 X supplicant program) located in the subscriber terminal and the protocol authenticator (e.g., an IEEE 802.1X authenticator program) located in the network switch are driven to authenticate the subscriber terminal for network access through a central authentication server. Accordingly, such a system is suitable for a closed network in which subscriber terminals requesting authentication are limited. In other words, in order to provide secured network service, it is necessary to install specific software (e.g., a supplicant program) in all of the subscriber terminals desiring to use the network service.

This is a burden on the Internet service provider (ISP) that desires to provide security without placing specific requirements or limitations on the subscriber terminals. That is, since the ISP must install specific software (e.g., a supplicant program) in all of the subscriber terminals in order to provide the secured network service, it is necessary to consider the initial installation cost, as well as the additional software management cost, for the subscriber terminals in providing the relevant network service, thereby imposing a heavy burden on the ISP.

### SUMMARY OF THE INVENTION

The present invention has been developed to solve the aforementioned problem. It is an object of the present invention to provide an apparatus and method capable of providing secured network service with less initial investment cost and management cost imposed on the Internet service provider (ISP).

It is another object of the present invention to provide an apparatus and method for providing rapid authentication of a subscriber terminal for network access without installing an authentication supplicant for requesting subscriber terminal authentication in the subscriber terminal.

According to an aspect of the present invention, there is provided an apparatus for authenticating a user for network access in a communication system, comprising: an input module contained in a subscriber terminal for receiving identification information and a password for network access from a user; an authentication supplicant contained in network equipment for requesting network access authentication based on the identification information and password received from the input module; an authentication server for storing information related to the network access authentication therein, and for performing authentication to determine whether to permit the subscriber terminal to access the network in response to the authentication request; and a protocol authenticator for performing protocol processing between the authentication supplicant and the authentication server.

According to another aspect of the present invention, there is provided a method for authenticating a user for network access in a communication system containing network equipment with an authentication supplicant, the method comprising: receiving, by means of the authentication supplicant, identification information and a password for network access from a subscriber terminal; sending, by means of the authentication supplicant, the identification and password to an authentication server performing network access authentication so as to request network access authentication of the subscriber terminal; and receiving, by means of the authentication supplicant, an authentication result for the subscriber terminal from the authentication server.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:
FIG. 1 is a configuration diagram of a user authentication apparatus;
FIG. 2 a diagram of the processing procedure of a user authentication method;
FIG. 3 is a configuration diagram of an apparatus for authenticating a user for network access according to an embodiment of the present invention; and
FIG. 4 is a diagram of the processing procedure of a method for authenticating a user for network access according to an embodiment of the present invention.

### DETAILED DESCRIPTION OF THE PREFERRED EMBODIMENTS

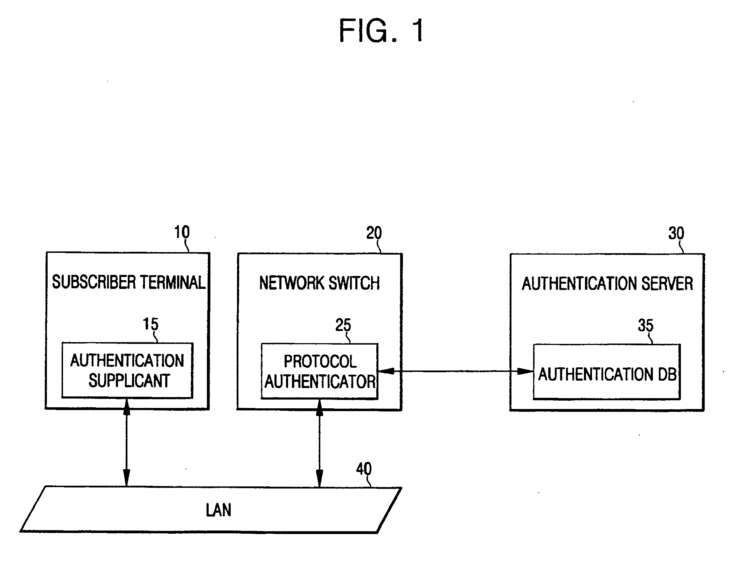

FIG. 1 is a configuration diagram of a user authentication apparatus.

Referring to FIG. 1, the user authentication apparatus includes an authentication supplicant 15 located in a subscriber terminal 10 for requesting authentication, and an authentication database (DB) 35 located in an authentication server 30 for storing authentication-related information. The authentication server 30 performs authentication to provide a network service in response to the request from the authentication supplicant 15. A protocol authenticator 25, normally located in a network switch 20, provides protocol interworking between the authentication supplicant 15 and the authentication server 30. The subscriber terminal 10 and the network switch 20 are interconnected via a LAN 40.

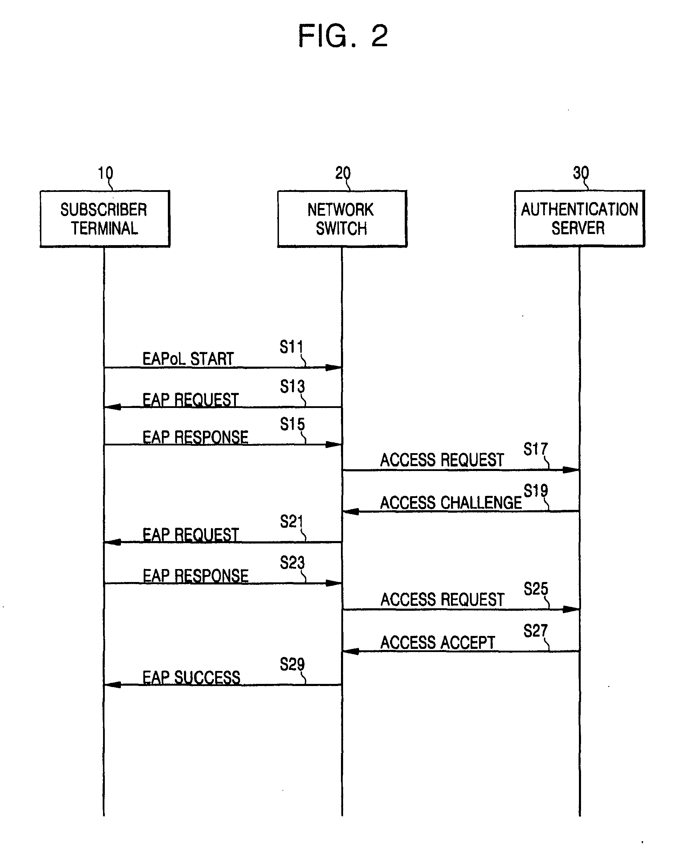

FIG. 2 is a diagram of the processing procedure of a user authentication method. In particular, FIG. 2 shows an exemplary case wherein initiation of a user authentication process is determined by the subscriber terminal and, thus, by the authentication supplicant located therein. The processing procedure for authenticating a user for network access in the user authentication apparatus will now be described with reference to FIG. 2.

Referring to FIG. 2, when the subscriber terminal 10 sends a message (EAPoL Start: Extensible Authentication Protocol (EAP) over LAN Start) to the network switch 20 and, thus, to the protocol authenticator 25 located therein, reporting the initiation of the authentication process (S 11), the network switch 20 sends to the subscriber terminal 10 a message (EAP Request) for requesting identification information needed to identify the subscriber or device for which authentication is requested (S 13). If the initiation of the user authentication process is determined by the network switch 20 rather than the subscriber terminal 10, the process S11 may be omitted.

The subscriber terminal 10 sends a response message (EAP Response) containing its own identification (ID) to the network switch 20 in response to the request message (EAP Request) (S 15). The network switch 20 sends an access request message (Access Request) to the authentication server 30 so that authentication for the subscriber terminal 10 will be performed (S 17). At this point, the network switch 20 includes the identification (ID) of the subscriber terminal 10 in the access request message (Access Request) prior to sending it.

In response to the access request message (S17), the authentication server 30 sends a message (Access Challenge) to the network switch 20 in order to request an access password (S 19). The network switch 20 then sends to the subscriber terminal 10 a message (EAP Request) in an EAP format, which is produced by extracting only a portion corresponding to an EAP from the message (Access Challenge) (S21). In addition to the foregoing message, the authentication server 30 sends encryption scheme information for allowing the access password to be encrypted.

The subscriber terminal 10 receives the access password request and the encryption scheme information for the access password, encrypts a pre-stored or user-input access password using the encryption scheme, and includes the encrypted access password in a response message (EAP Response) which is then sent to the network switch 20 (S23).

The network switch 20 includes the encrypted access password in an access request message (Access Request) which is sent to the authentication server 30 (S25). The authentication server 30 performs the network access authentication for the subscriber terminal 10 based on the received access password. As an authentication result, when the subscriber terminal 10 is to be authenticated for network access, the authentication server 30 sends a message (Access Accept) to the network switch 20, reporting the access acceptance (S27). The network switch 20 translates the message (Access Accept) into a message (EAP Request) in an EAP format, and then sends the message (EAP Success) in the EAP format to the subscriber terminal 10 (S29).

In this system, the authentication supplicant 15 (e.g., an IEEE 802.1X supplicant program) located in the subscriber terminal 10 and the protocol authenticator 25 (e.g., an IEEE 802.1 X authenticator program) located in the network switch 20 are driven to authenticate the subscriber terminal for network access through a central authentication server. Accordingly, such a system is suitable for a closed network in which subscriber terminals requesting authentication are limited. In other words, in order to provide limited network service, it is necessary to install specific software (e.g., a supplicant program) in all of the subscriber terminals desiring to use the network service.

The present invention will now be described more fully hereinafter with reference to the accompanying drawings, in which preferred embodiments of the invention are shown. This invention may, however, be embodied in different forms, and should not be construed as limited to the specific embodiments set forth herein. Rather, these embodiments are provided so that this disclosure will be thorough and complete, and will fully convey the scope of the invention to those skilled in the art. Like numbers refers to like elements throughout the specification.

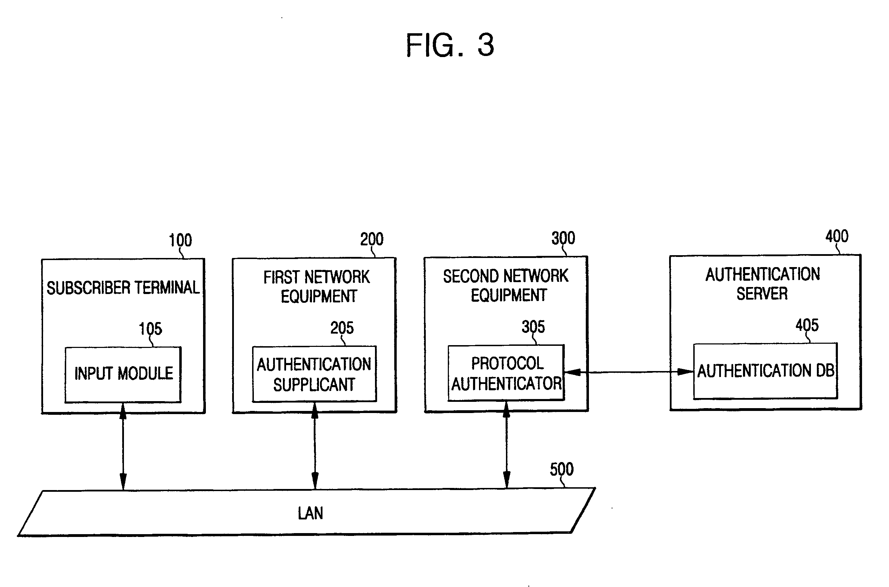

FIG. 3 is a configuration diagram of an apparatus for authenticating a user for network access according to an embodiment of the present invention.

Referring to FIG. 3, the apparatus for authenticating a user for network access according to an embodiment of the present invention is configured as follows. The apparatus includes an input module 105 contained in a subscriber terminal 100 for receiving identification (ID) information and a password from a user, an authentication supplicant 205 located in first network equipment 200 for requesting authentication for the identification (ID) information and password inputted via the input module 105, and an authentication database (DB) 405 located in an authentication server 400 for storing authentication related information therein. The authentication server 400 performs authentication so as to provide network service in response to the request from the authentication supplicant 205, and a protocol authenticator 305 located in second network equipment (normally, a network switch) 300 provides protocol interworking between the authentication supplicant 205 and the authentication server 400. The subscriber terminal 100, the first network equipment 200, and the second network equipment 300 are interconnected via a LAN 500 in FIG. 3, but they may be interconnected via a digital subscriber line (xDSL) or a wide area network (WAN).

The subscriber terminal 100 may be any of a number of devices, including an interface device that allows a user to enter his or her identification (ID) information and password (PWD). Examples of the subscriber terminal 100 include a personal computer (PC), a personal digital assistant (PDA), a notebook, a home gateway, and the like. Furthermore, examples of the first network equipment 200 and the second network equipment 300 include an Ethernet switch, a digital subscriber line access multiplexer (DSLAM), and the like.

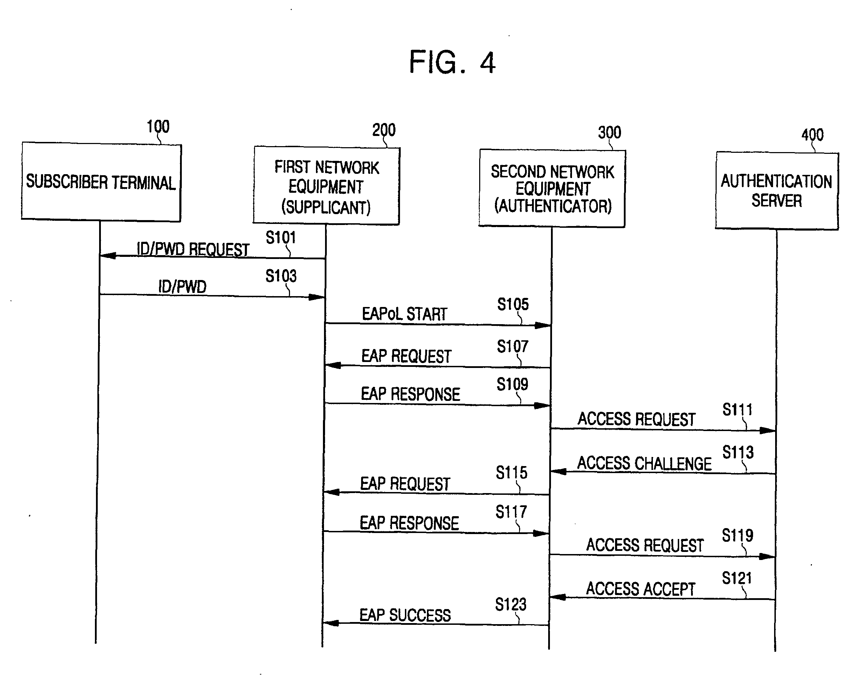

FIG. 4 is a diagram of the processing procedure of a method for authenticating a user for network access according to an embodiment of the present invention. In particular, FIG. 4 shows an exemplary case wherein initiation of the user authentication process is determined by the first network equipment 200.

The processing procedure for authenticating a user for network access in a user authentication apparatus having a configuration as described above according to the present invention will be described with reference to FIG. 4.

The first network equipment 200 operates as a device (i.e., a supplicant) for requesting authentication, and the second network equipment 300 operates as a device (i.e., authenticator) for providing protocol interworking between the authentication server 400 and the first network equipment 200. If the first device (supplicant) for requesting authentication and the second device (authenticator) for providing the protocol interworking are implemented within one equipment, then the first network equipment 200 and the second network equipment 300 may be integrally configured.

Further referring to FIG. 4, when the first network equipment 200 requests the subscriber terminal 100 (S101) to input identification (ID) information and a password (hereinafter, referred to as PWD), which are promised in advance for the purpose of network access, the subscriber terminal 100 sends the identification (ID) information and the password (PWD) to the first network equipment 200 in response to the request (S103).

An example of a method in which the first network equipment 200 requests the subscriber terminal 100 to enter the identification (ID) information and the password (PWD) may include a method involving a web-authentication window. This refers to a method in which a web-authentication window is displayed on the subscriber terminal 100, the user enters the identification (ID) information and password on the web-authentication window, and the network equipment receives the entered identification (ID) information and password.

The authentication process now described is different from prior processes in that the authentication request is made not by the subscriber terminal 100, but rather by network equipment disposed, for example, in a central office.

First, the first network equipment 200, which receives the identification (ID)information and password (PWD) from the subscriber terminal 100, sends a message (EAPoL Start: EAP over LAN Start), reporting the initiation of the authentication process, to the second network equipment 300 and, thus, to the protocol authenticator 305 located therein (S105), and receives from the second network equipment 300 a message (EAP Request) requesting identification information needed to identify the subscriber or device for which authentication is requested (S107).

In response to the request message (EAP Request) in S107, the first network equipment 200 sends, to the second network equipment 300, a response message (EAP Response) containing the identification (ID) information transferred from the subscriber terminal 100 (S109), and the second network equipment 300 then sends an access request message (Access Request) to the authentication server 400 so that authentication of the subscriber terminal 100 can be performed (S111). In the latter regard, the second network equipment 300 includes the identification (ID) information of the subscriber terminal 100 in the access request message (Access Request) before sending it to the authentication server 400. The second network equipment 300 uses an authentication protocol (e.g., RADIUS, Diameter, or the like) to send the access request message.

In response to the access request in S 111, the authentication server 400 sends, to the second network equipment 300, a message (Access Challenge), requesting an access password (S113). The second network 300 then extracts only a portion corresponding to the EAP from the message (Access Challenge) to produce a message (EAP Request) in an EAP format, and sends the message to the first network equipment 200 (S 115). In addition to the foregoing message, the authentication server 400 sends encryption scheme information for encryption of the access password.

The first network equipment 200, which receives the request and the encryption scheme information for the access password, encrypts the password transferred from the subscriber terminal 100 using the encryption scheme, and includes the encrypted password in a response message (EAP Response), which it sends to the second network equipment 300 (S117). The second network equipment 300 includes the encrypted password in the access request message (Access Request), which it sends to the authentication server 400 (S119). That is, the second network equipment 300 loads the encrypted password on the authentication protocol and sends it to the authentication server 400.

The authentication server 400 performs network access authentication for the subscriber terminal 100 connected to the first network equipment 200 based on the password received in S 119. When the authentication server 400 desires to authenticate the subscriber terminal 100 for network access, the authentication server 400 sends a message (Access Accept) to the second network equipment 300, reporting the access acceptance (S121). The second network equipment 300 translates the message (Access Accept) into a message (EAP Request) in the EAP format, and thereafter sends the message (EAP Success) in the EAP format to the first network equipment 200 (S 123).

Specifically, the authentication server 400, which receives the identification (ID) information and password (PWD) of the subscriber terminal 100, confirms whether the identification (ID) information and password (PWD) transferred from the subscriber terminal 100 exist in the authentication database 405 (FIG. 3) or in a subscriber management directory therein. If it is confirmed that the identification (ID) information and password (PWD) transferred from the subscriber terminal 100 exist in the database 405 or in the subscriber management directory, the authentication server 400 transmits a success message to the second network equipment 300, reporting that the password is valid. Otherwise, it transmits a "failure" or "failed" message to report the non-existence of the password in the database 405.

Through the foregoing procedure, the first network equipment 200, which receives the authentication result from the authentication server 400, transmits packets of the subscriber terminal 100 to the network or drops it, according to the result of the authentication process.

As described above, according to the present invention, the authentication supplicant 205 is included in the first network equipment 200 rather than in the subscriber terminal 100, so that the first network equipment 200 prepares and sends the authentication request.

As described above, with the present invention, it is possible to perform network access authentication for subscriber terminals without it being necessary for the Internet service provider to install specific software (e.g., a supplicant program) in each of the subscriber terminals. This makes it possible to control network access and registration of the subscriber terminals without installing the software (e.g., a supplicant program) in all of the subscriber terminals. As a result, the initial installation cost and management cost of providing service to subscriber terminals is reduced.

Furthermore, the present invention allows the implementation of subscriber terminal-based network access authentication, rather than port-based network access authentication. That is, the present invention is capable of authenticating and billing each subscriber terminal for network access using a logical port by assigning the logical port to the subscriber terminal. Moreover, the authentication and billing can be associated with quality of service set up for each subscriber terminal.

Although an exemplary embodiment of the present invention has been illustrated, it will be apparent that various changes may be made to the disclosed embodiment without departing from the spirit and scope of the present invention. Therefore, the present invention should not be limited to the illustrated embodiment, but should be determined by the appended claims and their equivalents.

## Claims

1. An apparatus for authenticating a user for network access in a communication system, comprising:
an input module contained in a subscriber terminal for receiving from a user and transferring identification information and a password for network access;
an authentication supplicant contained in network equipment for requesting network access authentication for the subscriber terminal based on the identification information and the password transferred by the input module;
an authentication server for storing information related to the network access authentication, and for performing authentication to determine whether to permit the subscriber terminal to access a network in response to the request for network access authentication; and
a protocol authenticator for performing protocol processing between the authentication supplicant and the authentication server.

2. The apparatus according to claim 1, wherein the authentication supplicant and the protocol authenticator are located in a single network equipment.

3. The apparatus according to claim 1, wherein the authentication supplicant and the protocol authenticator are located in different network equipment interconnected through one of a local area network (LAN) a digital subscriber line (DSL) and a wide area network (WAN).

4. The apparatus according to claim 1, wherein the subscriber terminal comprises one of a personal computer, a personal digital assistant, a notebook computer, and a home gateway.

5. The apparatus according to claim 1, wherein the network equipment comprises one of an Ethernet switch and a digital subscriber line access multiplexer.

6. The apparatus according to claim 1, wherein the authentication server comprises an authentication database for storing the information related to the network access authentication.

7. The apparatus according to claim 6, wherein the authentication database stores a plurality of valid passwords and identification information.

8. A method for authenticating a user for network access in a communication system containing network equipment and an authentication supplicant, the method comprising the steps of:
receiving, at the authentication supplicant, identification information and a password for network access from a subscriber terminal;
sending, by means of the authentication supplicant, the identification information and the password to an authentication server so as to request network access authentication of the subscriber terminal; and
receiving, at the authentication supplicant, from the authentication server an authentication result relative to the subscriber terminal.

9. The method according to claim 8, further comprising the step of controlling, by means of the authentication supplicant, the network access for the subscriber terminal based on the authentication result relative to the subscriber terminal.

10. The method according to claim 8, wherein the step of receiving the identification information and the password comprises:
displaying, at the authentication supplicant, a web-authentication window on the subscriber terminal; and
inputting the identification information and the password using the web-authentication window displayed on the subscriber terminal.

11. The method according to claim 10, wherein the identification information and the password are received over the network.

12. The apparatus according to claim 8, wherein the subscriber terminal comprises one of a personal computer, a personal digital assistant, a notebook computer, and a home gateway.

13. The apparatus according to claim 8, wherein the network equipment comprises one of an Ethernet switch and a digital subscriber line access multiplexer.

14. The apparatus according to claim 8, wherein the authentication server comprises an authentication database for storing the information related to the network access authentication.

15. The apparatus according to claim 13, wherein the authentication database stores a plurality of valid passwords and identification information.
